(19) Europäisches Patentamt
European Patent Office
Office européen des brevets

(11) **EP 2 606 330 B1**

(12) **EUROPÄISCHE PATENTSCHRIFT**

(45) Veröffentlichungstag und Bekanntmachung des Hinweises auf die Patenterteilung:
**24.09.2014  Patentblatt 2014/39**

(21) Anmeldenummer: **11794711.9**

(22) Anmeldetag: **07.12.2011**

(51) Int Cl.:
*G01L 25/00* (2006.01)      *G01L 9/00* (2006.01)
*G01L 9/12* (2006.01)      *G01L 27/00* (2006.01)

(86) Internationale Anmeldenummer:
**PCT/EP2011/072119**

(87) Internationale Veröffentlichungsnummer:
**WO 2012/076615 (14.06.2012 Gazette 2012/24)**

(54) **VERFAHREN ZUR SELBSTÜBERWACHUNG EINER KERAMISCHEN DRUCKMESSZELLE EINES KAPAZITIVEN DRUCKSENSORS UND EINE AUSWERTESCHALTUNG ZUR DURCHFÜHRUNG DES VERFAHRENS**

METHOD FOR THE SELF-MONITORING OF A CERAMIC PRESSURE MEASURING CELL OF A CAPACITIVE PRESSURE SENSOR AND AN EVALUATION CIRCUIT FOR CARRYING OUT THE METHOD

PROCÉDÉ DE CONTRÔLE AUTOMATIQUE D'UNE CELLULE DE MESURE DE PRESSION CÉRAMIQUE D'UN CAPTEUR DE PRESSION CAPACITIF ET CIRCUIT D'ÉVALUATION POUR METTRE EN OEUVRE CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2010  DE 102010062622**

(43) Veröffentlichungstag der Anmeldung:
**26.06.2013  Patentblatt 2013/26**

(73) Patentinhaber: **IFM Electronic GmbH**
**45128 Essen (DE)**

(72) Erfinder: **WALTER, Heinz**
**88145 Hergatz (DE)**

(56) Entgegenhaltungen:
**DE-C1- 19 851 506      US-A1- 2009 301 211**

**Beschreibung**

Die Erfindung betrifft ein Verfahren zur Selbstüberwachung einer keramischen Druckmesszelle eines kapazitiven Drucksensors sowie eine Auswerteschaltung zur Durchführung des Verfahrens gemäß dem Oberbegriff des Anspruchs 1 und 2 bzw. Anspruchs 9.

Kapazitive Drucksensoren werden in vielen Industriebereichen zur Druckmessung eingesetzt. Sie weisen häufig eine keramische Druckmesszelle, als Messwandler für den Prozessdruck, und einen Auswerteelektronik zur Signalverarbeitung auf.

Kapazitive Druckmesszellen bestehen aus einem keramischen Grundkörper und einer Membran, wobei zwischen dem Grundkörper und der Membran ein Glaslotring angeordnet ist. Der sich dadurch ergebende Hohlraum zwischen Grundkörper und Membran ermöglicht die längsgerichtete Beweglichkeit der Membran infolge eines Druckeinflusses. An der Unterseite der Membran und an der gegenüberliegenden Oberseite des Grundkörpers sind jeweils Elektroden vorgesehen, die zusammen einen Messkondensator bilden. Durch Druckeinwirkung kommt es zu einer Verformung der Membran, was eine Kapazitätsänderung des Messkondensators zur Folge hat.

Mit Hilfe einer Auswerteeinheit wird die Kapazitätsänderung erfasst und in einen Druckmesswert umgewandelt. In der Regel dienen diese Drucksensoren zur Überwachung oder Steuerung von Prozessen. Sie sind deshalb häufig mit übergeordneten Steuereinheiten (SPS) verbunden.

Aus der DE 198 51 506 C1 ist ein kapazitiver Drucksensor bekannt, bei dem der Druckmesswert aus dem Quotient zweier Kapazitätswerte, eines Messkondensators und eines Referenzkondensators, ermittelt wird. In dieser Patentschrift ist eine Druckmesszelle zwar nicht speziell beschrieben, die dargestellte Schaltung und das beschriebene Verfahren ist aber für kapazitive Druckmesszellen geeignet.

Aus der EP 0 569 573 B1 ist eine Schaltungsanordnung für einen kapazitiven Drucksensor bekannt, bei dem ebenfalls ein Quotientenverfahren zur Druckauswertung eingesetzt wird.

Quotientenverfahren gehen in der Regel von folgenden Druckabhängigkeiten aus:

$$p \sim \frac{C_R}{C_M} \quad \text{bzw.} \quad p \sim \frac{C_R}{C_M} - 1 \quad \text{oder} \quad p \sim \frac{C_M - C_R}{C_M + C_R},$$

wobei $C_M$ die Kapazität des Messkondensators, $C_R$ die Kapazität des Referenzkondensators und p den zu bestimmenden Prozessdruck bezeichnet. Denkbar ist auch die Möglichkeit, $C_M$ und $C_R$ im Quotienten zu vertauschen. Das angegeben Beispiel mit $C_M$ im Nenner stellt allerdings zugunsten der Eigenlinearisierung die gebräuchlichste Form dar. Im Folgenden wird daher von dieser Ausführungsform ausgegangen, sofern nicht anders angegeben.

Die Zuverlässigkeit bei kapazitiven Drucksensoren gewinnt immer mehr an Bedeutung. Problematisch bei kapazitiven Drucksensoren, die nach dem Quotientenverfahren arbeiten, ist, dass ein Mediumseintritt - verursacht durch Membranbruch oder ermöglicht durch einen eventuellen Entlüftungskanal - aufgrund der Quotientenbildung nicht erkannt werden könnte, weil sich sowohl im Zähler als auch im Nenner die Dielektrizitätszahl $\varepsilon_r$ entsprechend ändert. Erschwert wird das Problem, wenn sich das $\varepsilon_r$ des eintretenden Mediums vom $\varepsilon_r$ von Luft nur gering unterscheidet. Dies ist insbesondere der Fall, wenn das zu messende Medium Öl ist. Das $\varepsilon_r$ von Öl liegt typischerweise zwischen 2 und 4, während das $\varepsilon_r$ von Luft bei 1 liegt.

Aufgabe der vorliegenden Erfindung ist es, ein Verfahren zur Funktionsüberwachung einer Druckmesszelle eines kapazitiven Drucksensors und eine entsprechende Auswerteschaltung anzugeben, die die oben genannten Nachteile nicht aufweisen, die insbesondere eine sichere und zuverlässige Erkennung eines Mediumseintritts, etwa durch einen eventuellen Entlüftungskanal oder bei Membranbruch, erlauben.

Gelöst wird diese Aufgabe durch die in Anspruch 1 und 2 bzw. Anspruch 6 angegebenen Merkmale. Vorteilhafte Weiterentwicklungen der Erfindung sind in den jeweiligen Unteransprüchen angegeben.

Erfindungsgemäß ist das Verfahren zur Selbstüberwachung einer Druckmesszelle eines kapazitiven Drucksensors in einer ersten Alternative dadurch gekennzeichnet, dass mit einem Zusatzkondensator, der außerhalb der Druckmesszelle angeordnet ist, ein Kontrolldruckmesswert gewonnen wird und durch Vergleich des eigentlichen Druckmesswertes mit dem Kontrolldruckmesswert auf die Funktionsfähigkeit der Druckmesszelle geschlossen wird.

Die wesentliche Idee der Erfindung besteht darin, bei einem kapazitiven Drucksensor mit einer keramischen Druckmesszelle mit Hilfe eines Zusatzkondensators $C_Z$, dessen Kapazität unabhängig vom Membrandruck ist, einen Kontrolldruckmesswert zu ermitteln, der mit dem eigentlichen Druckmesswert verglichen wird. Bedingung hierfür ist, dass sowohl die Kapazität des Messkondensators als auch anteilig die des Referenzkondensators infolge eines Druckeinflusses veränderlich ist, während die Kapazität des Zusatzkondensators konstant bleibt, da sie unabhängig vom anliegenden Druck ist.

Der Vergleich des eigentlichen Druckmesswertes mit dem Kontrolldruckmesswert erfolgt vorteilhafterweise über eine Differenzbildung beider Messwerte. Prinzipiell denkbar ist auch eine Quotientenbildung, jedoch könnte sich, bspw. bei Null-Druck, die rechnerische Gefahr einer Division durch Null ergeben.

In einer vorteilhaften Weiterbildung der Erfindung wird der Druckmesswert und/oder der Kontrolldruckmesswert mit Hilfe eines Quotientenverfahrens gewonnen. Der zum zweiten Quotient für den Kontrollmesswert benötigte Nenner ist vorteilhafterweise derselbe wie der vom ersten für den eigentlichen Druckwert.

Es ist alternativ auch denkbar, Druckwert und Kontrolldruckmesswert über eine Differenzbildung zu berechnen. In diesem Fall wäre - bspw. über einen Klimasensor- das Dielektrikum zu ermitteln, um Schwankungen der Kapazitäten aufgrund von Änderungen der dielektrischen Leitfähigkeit bzw. Permittivität auszugleichen, Beim Quotientenverfahren wäre dies hingegen nicht nötig, weil sich sowohl im Zähler als auch im Nenner die Dielektrizitätszahl im gleichen Maß ändert.

Wenn dann die beiden Quotienten $C_R/C_M$ und $C_Z/C_M$ miteinander verglichen werden und die Messzelle intakt ist, bewegt sich dieser Unterschied in einem definierten Bereich. Sobald die Messzelle defekt ist, z.B. ein Membranbruch, unterscheiden sich beide Quotienten derart deutlich voneinander, dass eindeutig auf einen Fehler- bzw. Störfall geschlossen werden kann.

In vorteilhafter Weise erfolgt die Kalibrierung des kapazitiven Drucksensors so, dass der Kontrolldruckmesswert und der eigentliche Druckmesswert die gleiche funktionale Abhängigkeit vom Prozessdruck aufweisen, damit durch einfachen Vergleich beider Messwerte, z. B. mit Hilfe eines Differenzverstärkers, ein Diagnosewert ermittelt werden kann.

Neben der zuvor beschrieben analogen Ausführung lässt sich die aufgezeigte Aufgabe auch digital verarbeitet lösen, indem in einer zweiten Alternative das Verfahren zur Selbstüberwachung einer Druckmesszelle eines kapazitiven Drucksensors erfindungsgemäß dadurch gekennzeichnet ist, dass eine Verarbeitungseinheit, bestehend aus wenigstens einer Konverter-Einheit und einem Mikrocontroller, vorgesehen ist, in der die Kapazitätswerte des Messkondensators sowie des Referenzkondensators erfasst werden, aus beiden Kapazitätswerten der Druckmesswert gebildet wird und in der ein weiterer Kapazitätswert erfasst wird, der einem Zusatzkondensator entspricht und aus dem ein Kontrolldruckmesswert gewonnen wird, wobei durch Vergleich des Druckmesswertes mit dem Kontrolldruckmesswert auf die Funktionsfähigkeit der Druckmesszelle geschlossen wird.

Im Unterschied zur ersten Alternative des Verfahrens werden die Kapazitätswerte von Mess- und Referenzkondensator von einer Konverter-Einheit erfasst und an einen Mikrocontroller weitergegeben, wo sowohl die Quotientenberechnung als auch der Vergleich von Druckmesswert und Kontrolldruckmesswert erfolgt. Der Zusatzkondensator kann dabei entweder als Bauteil bzw. Komponente vorliegen, dessen Kapazitätswert ebenfalls von der Konverter-Einheit erfasst und an den Mikrocontroller weitergegeben wird, oder in Form eines in der Verarbeitungseinheit, insbesondere im Mikrocontroller abgespeicherten Kapazitätswerts ausgeführt sein.

In einem weiteren Aspekt betrifft die Erfindung eine Auswerteschaltung für einen oben genannten kapazitiven Sensor, mit einem Messkondensator und einem Referenzkondensator, wobei der Referenzkondensator in einem Differenzierzweig und der Messkondensator in einem Integrierzweig vorgesehen ist, die beide parallel geschaltet sind und mit einem Spannungssignal beaufschlagt werden, wobei das Ausgangssignal des Integrierzweiges dem Differenzierzweig zugeführt wird, an dessen Ausgang ein erstes druckabhängiges Ausgangssignal anliegt. Erfindungsgemäß ist parallel zum Differenzierzweig ein Kontrollmesszweig mit einem Zusatzkondensator-geschaltet und das Ausgangssignal des Integrierzweiges wird zusätzlich dem Kontrollmesszweig zugeführt, an dessen Ausgang ein zweites druckabhängiges Ausgangssignal anliegt. Beide Ausgangssignale werden dann einer Vergleichereinheit zugeführt, an deren Ausgang ein Diagnosesignal ausgegeben wird.

Die beiden druckabhängigen Ausgangssignale von Differenzier- und Kontrollmesszweig können dabei sowohl direkt der Vergleichereinheit zugeführt werden als auch indirekt, bspw. über jeweils eine Sample-and-Hold-Schaltung, die die Rechteckspannung zu Gleichspannung umwandelt.

Nachfolgend wird die Erfindung im Zusammenhang mit Figuren anhand von Ausführungsbeispielen näher erläutert.

Es zeigen:

Figur 1 ein Blockdiagramm eines kapazitiven Drucksensors,

Figur 2 eine schematische Schnittdarstellung einer kapazitiven Druckmesszelle,

Figur 3 eine Auswerteschaltung für eine kapazitive Druckmesszelle gemäß Figur 2,

Figur 4 eine erfindungsgemäße Auswerteschaltung für eine kapazitive Druckmesszelle gemäß Figur 2,

Figur 5 eine erfindungsgemäße Auswerteschaltung für eine kapazitive Druckmesszelle gemäß Figur 2 ohne Sample-and-Hold-Schaltungen,

Figur 6 ein Diagramm, das das Verhalten der drei Kapazitätswerte $C_M$, $C_R$ $C_Z$ über dem Druck vereinfacht darstellt,

Figur 7 ein Diagramm, das das Verhalten der Diagnosespannung $U_{DIAG}$ bei den drei Zuständen kein Druck, Druckeinfluss und Zellendefekt durch Mediumseintritt vereinfacht darstellt und

Figur 8 eine zu den Figuren 3-5 alternative Ausführungsform des erfindungsgemäßen Verfahrens.

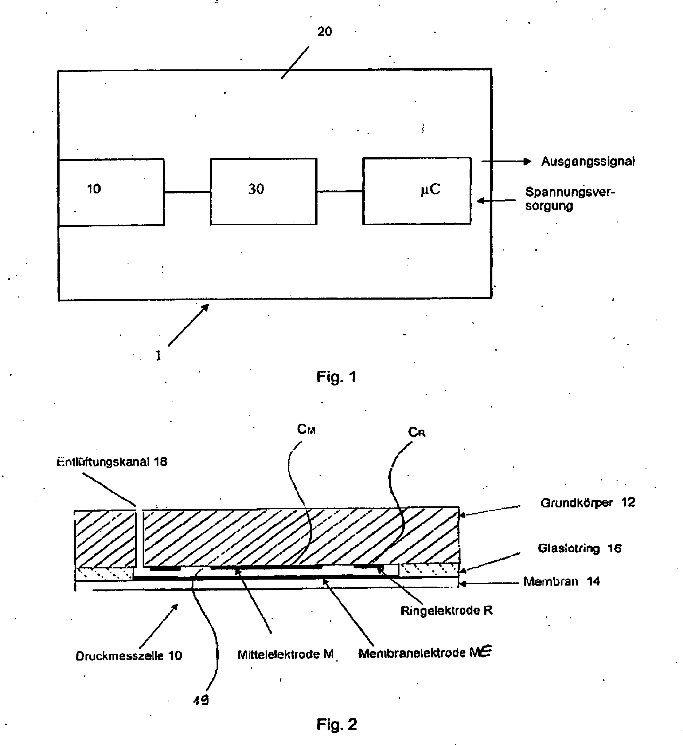

In Figur 1 ist ein Blockdiagramm eines typischen kapazitiven Drucksensors dargestellt, der zur Messung eines Prozessdrucks p (z. B. von Öl, Milch, Wasser etc.) eingesetzt wird. Der Drucksensor 1 besteht im Wesentlichen aus einer Druckmesszelle 10 und einer Auswerteelektronik 20. Die Auswerteelektronik 20 weist eine analoge Auswerteschaltung 30 und einen Mikrocontroller $\mu$C auf, in dem das analoge Ausgangssignal der Auswerteschaltung 20 digitalisiert und weiterverarbeitet wird. Der Mikrocontroller $\mu$C stellt das Auswerteergebnis als digitales oder analoges Ausgangssignal z. B. einer SPS zur Verfügung. Zur Energieversorgung ist der Drucksensor 1 an eine Spannungsversorgungsleitung (12 - 36 V) angeschlossen.

Figur 2 zeigt eine typische kapazitive Druckmesszelle 10, wie sie vielfältig bei kapazitiven Drucksensoren eingesetzt wird, in schematischer Darstellung. Die Druckmesszelle 10 besteht im Wesentlichen aus einem Grundkörper 12 und einer Membran 14, die über einen Glaslotring 16 miteinander verbunden sind. Der Grundkörper 12 und die Membran 14 begrenzen einen Hohlraum 19, der - vorzugsweise nur bei niedrigen Druckbereichen bis 50 bar - über einen Entlüftungskanal 18 mit der Rückseite der Druckmesszelle 10 verbunden ist.

Sowohl auf dem Grundkörper 12 wie auch auf der Membran 14 sind mehrere Elektroden vorgesehen, die einen Referenzkondensator $C_R$ und einen Messkondensator $C_M$ bilden. Der Messkondensator $C_M$ wird durch die Membranelektrode ME und die Mittelelektrode M gebildet, der Referenzkondensator $C_R$ durch die Ringelektrode R und die Membranelektrode ME.

Der Prozessdruck p wirkt auf die Membran 14, die sich entsprechend der Druckbeaufschlagung mehr oder weniger durchbiegt, wobei sich im Wesentlichen der Abstand der Membranelektrode ME zur Mittelelektrode M ändert. Dies führt zu einer entsprechenden Kapazitätsänderung des Messkondensators $C_M$. Der Einfluss auf den Referenzkondensator $C_R$ ist geringer, da sich der Abstand zwischen Ringelektrode R und Membranelektrode ME weniger stark verändert als der Abstand zwischen Membranelektrode ME zur Mittelelektrode M.

Im Folgenden wird zwischen der Bezeichnung des Kondensators und seinem Kapazitätswert nicht unterschieden. $C_M$ bezeichnet deshalb sowohl den Messkondensator an sich, wie auch dessen Kapazität.

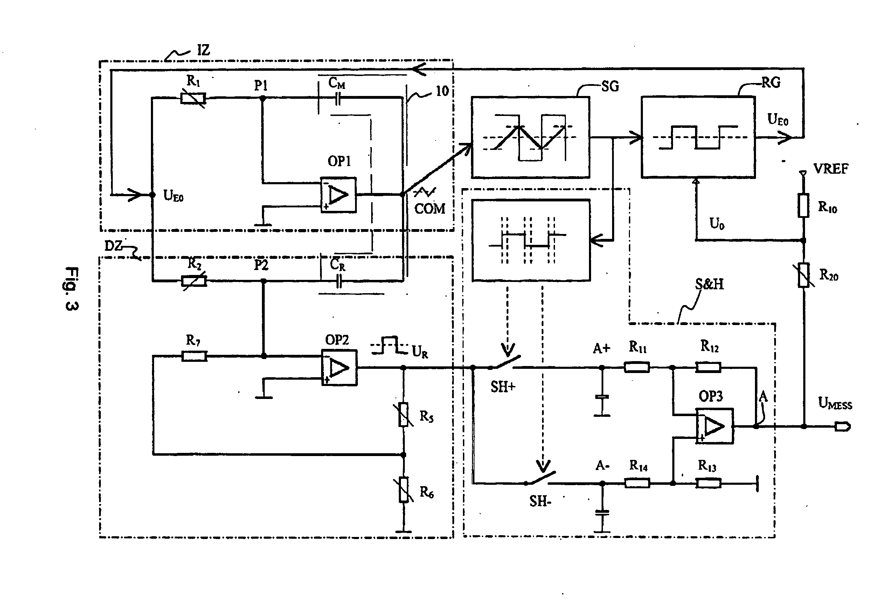

In Figur 3 ist eine bekannte Auswerteschaltung 30 für die Druckmesszelle 10 näher dargestellt. Der Messkondensator $C_M$ ist zusammen mit einem Widerstand $R_1$ in einem Integrierzweig IZ und der Referenzkondensator $C_R$ zusammen mit einem Widerstand $R_2$ in einem Differenzierzweig DZ angeordnet. Am Eingang des Integrierzweigs IZ liegt eine Rechteckspannung $U_{E0}$ an, die vorzugsweise symmetrisch um 0 Volt variiert. Die Eingangsspannung $U_{E0}$ wird über den Widerstand $R_1$ und den Messkondensator $C_M$ mithilfe eines Operationsverstärkers OP1, der als Integrator arbeitet, in ein linear ansteigendes bzw. abfallendes Spannungssignal (je nach Polarität der Eingangsspannung) umgewandelt, das am Ausgang COM des Integrierzweigs IZ ausgegeben wird. Der Messpunkt P1 liegt dabei durch den Operationsverstärker OP1 virtuell auf Masse.

Der Ausgang COM ist mit einem Schwellwertkomparator SG verbunden, der einen Rechteckgenerator RG ansteuert. Sobald das Spannungssignal am Ausgang COM einen Schwellwert über- bzw. unterschreitet, ändert der Komparator SG sein Ausgangssignal, woraufhin der Rechteckgenerator seine Ausgangsspannung jeweils invertiert.

Der Differenzierzweig DZ besteht weiter aus einem Operationsverstärkers OP2, einem Spannungsteiler mit den beiden Widerständen $R_5$ und $R_6$ und einem Rückführungswiderstand $R_7$. Der Ausgang des Operationsverstärkers OP2 ist mit einer Sample-and-Hold-Schaltung S&H verbunden. Am Ausgang der Sample-and-Hold-Schaltung S&H liegt die Messspannung $U_{Mess}$ an, die proportional zum Prozessdruck p, der auf die Druckmesszelle 10 wirkt, ist.

Nachfolgend ist die Funktion dieser Messschaltung näher erläutert. Der Operationsverstärker OP1 sorgt dafür, dass der Verbindungspunkt P1 zwischen dem Widerstand $R_1$ und dem Messkondensator $C_M$ virtuell auf Masse gehalten wird. Dadurch fließt ein konstanter Strom $I_1$ über den Widerstand $R_1$, der den Messkondensator $C_M$ solange auflädt, bis die Rechteckspannung $U_{E0}$ ihr Vorzeichen wechselt

Aus Figur 3 ist ersichtlich, dass für den Fall $R_1 = R_2$ und $C_M = C_R$ der Messpunkt P2 im Differenzierzweig DZ sogar dann auf dem gleichen Potenzial wie der Messpunkt P1, also auf Masseniveau, liegt, wenn die Verbindung zwischen dem Messpunkt P2 und dem Operationsverstärker OP2 nicht vorhanden wäre. Dies gilt nicht nur in diesem speziellen Fall, sondern immer dann, wenn die Zeitkonstanten $R_1 * C_M$ und $R_2 * C_R$ zueinander gleich sind. Beim Nullpunktabgleich wird dieser Zustand über die variablen Widerstände $R_1$ bzw. $R_2$ entsprechend eingestellt. Wenn sich die Kapazität des Messkondensators $C_M$ durch Druckeinwirkung ändert, ist die Bedingung der Gleichheit der Zeitkonstanten im Integrierzweig IZ und im Differenzierzweig DZ nicht mehr gegeben und das Potenzial am Messpunkt P2 würde vom Wert Null abweichen. Dieser Änderung wird aber unmittelbar mit dem Operationsverstärker OP2 entgegengewirkt, da der Operationsverstärker OP2 den Verbindungspunkt P2 weiterhin virtuell auf Masse hält. Am Ausgang des Operationsverstärkers OP2 liegt deshalb eine Rechteckspannung $U_R$ an, deren Amplitude vom Quotienten der beiden Zeitkonstanten abhängt. Man kann leicht zeigen, dass die Pulshöhe direkt proportional zum Prozessdruck $p \sim C_R/C_M - 1$ ist, wobei die Abhängigkeit im Wesentlichen linear ist. Die Pulshöhe dieses Spannungspulses lässt sich über den Spannungsteiler, der durch die beiden Widerstände $R_5$ und $R_6$ gebildet wird, einstellen.

Über eine Sample&Hold-Schaltung S&H wird die positive und negative Pulshöhe A+ bzw. A- des Rechteckpuls bestimmt und der Betrag A als Messspannung $U_{Mess}$ am Ausgang des Operationsverstärkers OP3 ausgegeben und an den Mikrocontroller mC (nicht gezeigt) weitergeleitet. Sie könnte aber auch direkt als Analogwert ausgegeben werden.

Die Pulshöhe der Eingangsspannung $U_{E0}$, die am Ausgang des Rechteckgenerators RG anliegt, wird in Abhängigkeit der Messspannung $U_{Mess}$ eingestellt, um eine bessere Linearität zu erzielen. Hierfür ist ein Spannungsteiler bestehend aus den Widerständen $R_{20}$ und $R_{10}$ vorgesehen. Dieser Spannungsteiler ist mit einer Referenzspannung VREF verbunden und vorteilhafterweise abgleichbar.

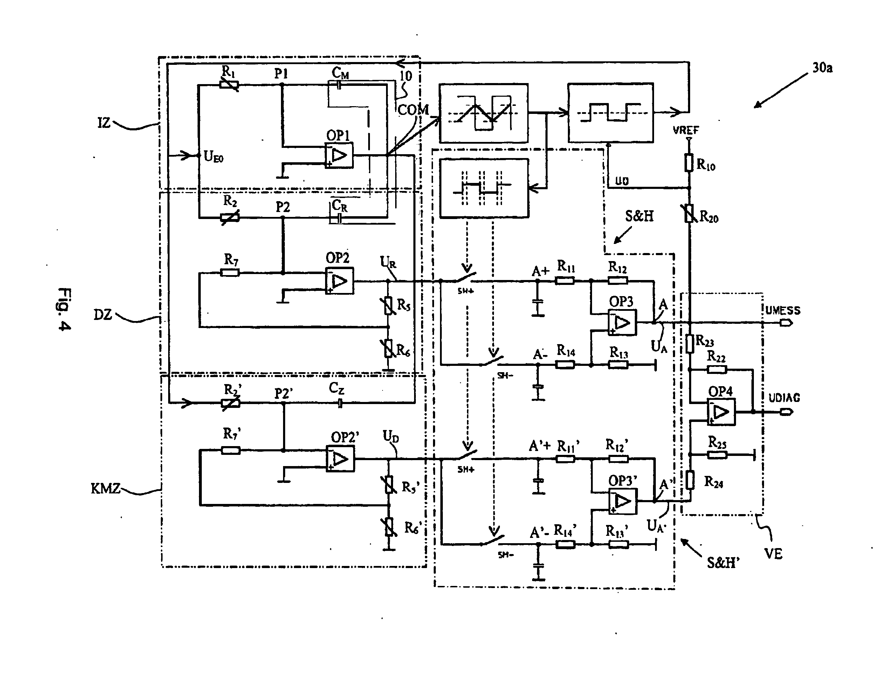

In Fig. 4 ist die erfindungsgemäße Auswerteschaltung 30a dargestellt. Diese Schaltung entspricht der Schaltung nach Fig. 3 jedoch mit einem zusätzlichen Kontrollmesszweig KMZ und einer Vergleichereinheit VE.

Der Kontrollmesszweig KMZ umfasst einen Widerstand $R_2$' und einen Zusatzkondensator $C_Z$, die parallel zu dem Widerstand $R_1$ und dem Messkondensator $C_M$ angeordnet sind. Mit dem Messpunkt P2' ist ein Operationsverstärker OP2' verbunden, der als Differenzierer wie der Operationsverstärker OP2 arbeitet. Am Ausgang des Operationsverstärkers OP2' liegt eine Rechteckspannung $U_D$ an, die proportional zum Ausdruck $C_Z/C_M$ - 1 ist. Diese Rechteckspannung wird ebenfalls mit einer Sample&Hold-Schaltung S&H' gleichgerichtet (Spannung $U_{A'}$ am Punkt A') und anschließend mit der Messspannung $U_{Mess}$ in einer Vergleichereinheit VE mit Hilfe eines Differenzverstärkers OP4 verglichen. Über die einstellbaren Widerstände $R_5$, und $R_6$' kann der funktionale Verlauf der Rechteckspannung $U_D$ - bzw. der Spannung $U_{A'}$ an A' - in Abhängigkeit des Prozessdrucks p entsprechend dem Verlauf der Messspannung $U_{Mess}$ dimensioniert werden. Am Ausgang des Differenzverstärkers OP4 liegt die Diagnose-Spannung $U_{DIAG}$ an.

Im Normalfall sind die beiden Spannungen $U_{A'}$ und $U_{Mess}$ für jeden Prozessdruck p nahezu gleich - aufgrund bspw. von Temperatureinflüssen ist ein Toleranzbereich einzuräumen - und die Ausgangsspannung $U_{DIAG}$ ist Null.

Die Diagnose-Spannung $U_{DIAG}$ folgt im Wesentlichen dem Ausdruck

$$U_{DIAG} = U_0 * \left[ k1 * \left( \frac{k2 * C_R}{C_M} - 1 \right) - k3 * \left( \frac{k4 * C_Z}{C_M} - 1 \right) \right],$$

wobei Folgendes gilt:

k1 = Verstärkungsfaktor Messzweig
k2 = Null-Abgleichfaktor Messzweig
k3 = Verstärkungsfaktor Kontrollmesszweig
k4 = Null-Abgleichfaktor Kontrollmesszweig.

Die Korrekturfaktoren k1 bis k4 werden vorteilhafterweise durch abgleichbare Widerstandsnetzwerke realisiert; ihre Platzierungen in der dargestellten Formel soll nur ein Beispiel aufzeigen und können selbstverständlich je nach beabsichtigter Proportionalitätsrichtung geändert werden.

Ein Mediumseintritt bzw. ein Membranbruch wirkt sich nur auf die Kapazitätswerte der zwei Kondensatoren $C_R$ und $C_M$ bzw. nur auf den Kapazitätswert eines dieser beiden Kondensatoren, jedoch nicht auf $C_Z$ aus, so dass in diesem Fall die Spannung $U_{DIAG}$ merklich von Null abweicht. Diese Abweichung kann von einem Mikrocontroller (nicht gezeigt) registriert und eine entsprechende Reaktion eingeleitet werden. Diese kann z. B. in einer Alarmmeldung bestehen, die an die SPS weitergeleitet wird oder einer Vor-Ort-Signalisierung.

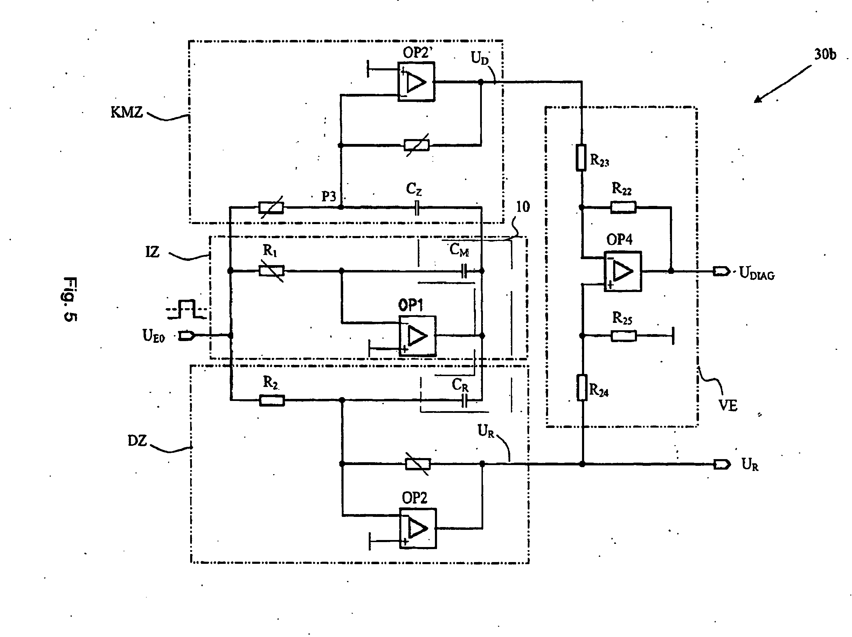

Fig. 5 zeigt eine etwas abgewandelte Schaltung 30b, die ohne ein Sample&Hold-Glied arbeitet. Der Vorteil gegenüber der Ausführung in Fig. 4 besteht darin, dass der Schaltungsaufwand reduziert und damit die Herstellungskosten reduziert werden können. Allerdings wird durch das rechteckförmige Diagnosesignal die Interpration erschwert. Die dargestellten Widerstände sind in Fig. 5 nur symbolisch gemeint und können jeweils auch ein Widerstandsnetzwerk umfassen. Die Messspannung $U_R$ ist wie in den zuvor beschriebenen Ausführungen eine Rechteckspannung. Deshalb wird das Diagnosesignal $U_{DIAG}$ in diesem Fall rechteckförmig ausgegeben. Beide Schaltungen 30a, 30b sind sowohl für eine analoge als auch eine digitale Weiterverarbeitung mit einem Mikrocontroller geeignet.

Nachfolgend ist das erfindungsgemäße Verfahren näher erläutert.

Wie bereits in den vorherigen Ausführungsbeispielen angegeben, weist die Druckmesszelle 10 des kapazitiven Drucksensors 1 einen Messkondensator $C_M$ und einen Referenzkondensator $C_R$ auf. Der Druckmesswert p, z. B. die Spannung $U_R$, wird vorteilhafterweise über ein Quotientenverfahren aus den Kapazitätswerten des Messkondensators $C_M$ und des Referenzkondensators $C_R$ gewonnen. Erfindungsgemäß wird mit Hilfe eines Zusatzkondensators $C_Z$ ebenfalls über ein Quotientenverfahren ein Kontrolldruckmesswert p', z. B. die Spannung $U_D$, gewonnen. Da der Zusatzkondensator $C_Z$ so angeordnet ist, dass er von einem Membranbruch der Membran 14 bzw. von einem Mediumseintritt in die Druckmesszelle 10 völlig unbeeinflusst bleibt, ändern sich die beiden Messwerte in jedem Fall unterschiedlich.

Durch den Vergleich dieser beiden Messwerte kann somit auf die Funktionsfähigkeit der Druckmesszelle geschlossen werden. Solange sich beide Messwerte mit dem Prozessdruck gleichmäßig ändern ist die Funktionsfähigkeit der Druckmesszelle gewährleistet.

Der Kontrolldruckmesswert p' kann sowohl mit dem Messkondensator $C_M$ als auch mit dem Referenzkondensator $C_R$ ermittelt werden.

Für eine einfache Auswertung erfolgt die Kalibrierung des kapazitiven Drucksensors so, dass der Kontrolldruckmesswert p' und der Druckmesswert p die gleiche funktionale Abhängigkeit vom Prozessdruck aufweisen. Es versteht sich von selbst, dass Teile der Auswerteschaltung 30a auch digital in einem Mikrocontroller realisiert sein können. Die Erfindung erlaubt es ohne großen Aufwand einen bestehenden kapazitiven Drucksensor um eine Diagnosefunktion zu erweitern.

Das erfindungsgemäße Verfahren sowie die entsprechende Auswerteschaltung sind nicht nur zur Feststellung eines Mediumeintritts bei einem Membranbruch sondern auch zur Diagnose von Anrissbildungen in der Membran 14 geeignet, weil sich dabei die Biegesteifigkeit der Membran 14 ändert und sich dies unterschiedlich auf den über den Referenzkondensator $C_R$ ermittelten Messwert p' und den über den Messkondensator $C_M$ ermittelten Druckmesswert p auswirkt.

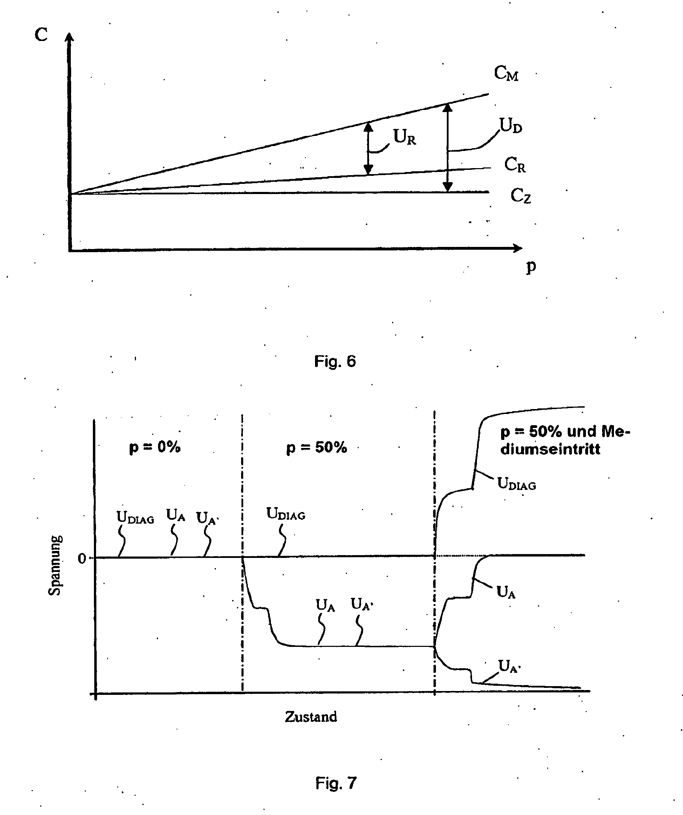

In Fig. 6 ist vereinfacht dargestellt, wie sich die drei Kapazitätswerte $C_M$, $C_R$, $C_Z$ über dem Druck verhalten. Der Kurve des Messkondensator $C_M$ hat die größte Steigung, weil er sich in der Mitte der Membran 14 der Druckmesszelle 10 befindet und damit bei Druckeinfluss die Membran 14 hier die größte Durchbiegung aufweist. Der Referenzkondensator $C_R$ befindet sich am Rand der Membran 14, wo die Abstandsänderung zwischen den beiden Elektroden R, ME geringer ist. Daher ist die Kapazitätszunahme je Druckeinheit geringer als beim Messkondensator $C_M$. Zu erkennen ist schließlich, dass sich die Kapazität des Zusatzkondensators $C_Z$ nicht ändert und über dem gesamten Druckverlauf konstant bleibt. Das ist die wesentliche Bedingung der Erfindung. Der Pfeil zwischen $C_M$ und $C_R$ verdeutlicht den betragsmäßigen Verlauf der eigentlichen Messspannung $U_R$, der Pfeil zwischen $C_M$ und $C_Z$ den betragsmäßigen Verlauf der Ausgangsspannung $U_D$ des Kontrollmesszweigs KMZ.

Figur 7 zeigt ein Diagramm, das das Verhalten der Diagnosespannung $U_{DIAG}$ bei den drei Zuständen kein Druck, Druckeinfluss vorhanden und Zellendefekt durch Mediumseintritt vereinfacht darstellt. Vereinfacht dargestellt bedeutet, dass es sich hierbei um eine Prinzipskizze handelt, so dass sich tatsächliche Signalverläufe geringfügig, insbesondere betragsmäßig anders darstellen könnten. Auch wurden weitere Einflüsse, wie resistive Fehler o. dgl., nicht berücksichtigt. Der grundsätzliche Signalverlauf wurde aber einer tatsächlichen Messung nachempfunden. Die Signale $U_A$ und $U_{A'}$ an den Punkten A bzw. A' sind die durch die Sample-and-Hold-Schaltung zu Gleichspannung umgewandelten Ausgangssignale $U_R$ und $U_D$ des Differenzierzweigs DZ und des Kontrollmesszweigs KMZ. Die Spannung $U_{DIAG}$ ist die Diagnosespannung als Differenz der beiden Signale $U_A$ und $U_{A'}$. Das Diagramm verdeutlicht somit die Arbeitsweise der Vergleichereinheit VE.

Im ersten Drittel des Diagramms liegt kein Druck an der Membran 14 an. Sowohl die beiden Signale $U_A$ und $U_{A'}$ als auch die Diagnosespannung $U_{DIAG}$ zeigen deshalb den Wert Null an.

Im zweiten Drittel des Diagramms wurde beispielhaft eine Druckbelastung der Membran 14 von 50 % angenommen. Da die Signalrichtung bei steigendem Druck negativ verläuft, bewegen sich die beiden Signale $U_A$ und $U_{A'}$ aufgrund des vorherigen Abgleichs deckungsgleich unterhalb der 0V-Linie. Die Diagnosespannung $U_{DIAG}$ als Differenz der beiden Signale $U_A$ und $U_{A'}$ ist demnach weiterhin Null. Die stufenartigen Signalverläufe von A und A' sind bedingt durch die abwechselnd und dadurch zeitversetzten Aktualisierungen der Sample-and-Hold-Kondensatoren an A+ und A-, deren Beträge der Ladespannungen erst addiert den Druckwert repräsentieren.

Im letzten Drittel des Diagramms sind die Signalverläufe bei einem Mediumseintritt dargestellt, wiederum bei angenommenen 50% Druckbelastung. Da sich jetzt das zu messende Medium innerhalb der Messzelle befindet, d.h. in dem durch den Grundkörper 12 und der Membran 14 begrenzten Hohlkörper 19, herrscht somit der gleiche Druck wie außerhalb der Membran 14 und die jetzt vergrößerte Permittivität wirkt sich auf den Betrag des Quotienten nicht aus. Folglich bewegt sich das Signal $U_A$ als Maß für die eigentliche Messspannung $U_{Mess}$ in Richtung 0 Volt. Ein stufenförmiger Signalverlauf ergibt sich wieder durch die Sample-and-Hold-Schaltung S&H. Das Signal $U_{A'}$ bewegt sich hingegen aufgrund der weiterhin konstanten Kapazität $C_Z$, die im Zähler des Quotienten zur Berechnung von $U_{A'}$ steht, und der wegen vergrößerter Permittivität einseitig größer werdenden Kapazität $C_M$, die im Nenner des Quotienten zur Berechnung von $U_{A'}$ steht, weiter in negative Richtung. Die Diagnosespannung $U_{DIAG}$ als Differenz der beiden Signale $U_A$ und $U_{A'}$ bewegt sich nun deutlich in positive Richtung. Zumindest - und das ist das Entscheidende - ist die Diagnosespannung $U_{DIAG}$ ungleich Null, was als Maß für einen Zellendefekt erkannt und weiterverarbeitet werden kann.

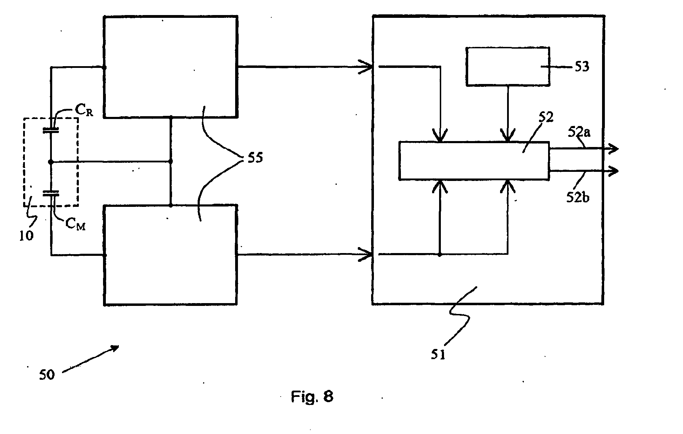

In Figur 8 ist eine zu den Figuren 4 und 5 alternative Ausführungsform des erfindungsgemäßen Verfahrens dargestellt. Die Druckmesszelle 10 ist dabei identisch zu den zuvor beschriebenen Ausführungsbeispielen. Die durch den Druckeinfluss resultierenden Kapazitätsänderungen von $C_M$ und $C_R$ werden jedoch nicht analog, sondern digital in einer Verarbeitungseinheit 50, bestehend aus wenigstens einer Konverter-Einheit 55 und einem Mikrocontroller 51, ausgewertet. Dazu ist es zunächst erforderlich, dass die Kapazitätswerte von $C_M$ und $C_R$ erfasst und digitalisiert werden. Hierfür ist eine Konverter-Einheit 55 vorgesehen, die bspw. als AD7745-Schaltkreis "Capacitance To Digital Converter" von Analog Devices ausgeführt sein kann. In Fig. 8 ist für beide Kondensatoren $C_M$ und $C_R$ jeweils eine Konverter-Einheit 55 vorgesehen. Es gibt aber auch mehrkanalige Konverter-Einheiten, so dass mit einer Konverter-Einheit mehrere Kapazitäten erfasst und digitalisiert werden können. Die digitalisierten Kapazitätswerte von $C_M$ und $C_R$ werden dann einem Mikrocontroller 51 zugeführt, in dessen Prozessoreinheit 52 die Quotiententerme $C_R/C_M-1$ und $C_Z/C_M-1$ errechnet und in der bereits zuvor beschriebenen Weise durch Differenzbildung miteinander vergleichen werden. Der Wert für $C_Z$ kommt dabei entweder, wie in Fig. 8 dargestellt, aus einer Speichereinheit 53, die sich vorzugsweise innerhalb des Mikrocontrollers 51 befindet und in der ein einen Zusatzkondensator $C_Z$ darstellender Kapazitätswert hinterlegt ist, oder alternativ von einem außerhalb der Verarbeitungseinheit 50 angeordneten, als Bauteil oder Komponente ausgeführten Kondensator, dessen Kapazität ebenfalls von einer Konvertereinheit 55 erfasst und digitalisiert dem Mikrocontroller 51 zugeführt wird. In beiden Fällen muss aber sichergestellt sein, dass die Kapazität $C_Z$ von einem Membranbruch der Membran 14 bzw. von einem Mediumseintritt in die Druckmesszelle 10 völlig unbeeinflusst bleibt. Das Ergebnis dieses Vergleichs, d.h. liegt ein Fehlerfall vor oder nicht, wird dann als Diagnosewert 52a neben dem eigentlichen Messwert 52b zur weiteren Verarbeitung weitergeben.

**Patentansprüche**

1. Verfahren zur Funktionsüberwachung einer Druckmesszelle (10) eines kapazitiven Drucksensors (1), wobei die Druckmesszelle (10) einen Messkondensator ($C_M$) und einen Referenzkondensator ($C_R$) aufweist und der Druckmesswert (p) aus den Kapazitätswerten des Messkondensators ($C_M$) und des Referenzkondensators ($C_R$) gewonnen wird,
   **dadurch gekennzeichnet, dass** mit einem Zusatzkondensator ($C_Z$), der außerhalb der Druckmesszelle (10) angeordnet ist, ein Kontrolldruckmesswert (p') gewonnen wird und durch Vergleich des Druckmesswertes (p) mit dem Kontrolldruckmesswert (p') auf die Funktionsfähigkeit der Druckmesszelle (10) geschlossen wird.

2. Verfahren zur Funktionsüberwachung einer Druckmesszelle (10) eines kapazitiven Drucksensors (1), wobei die Druckmesszelle (10) einen Messkondensator ($G_M$) und einen Referenzkondensator ($C_R$) aufweist und der Druckmesswert (p) aus den Kapazitätswerten des Messkondensators ($C_M$) und des Referenzkondensators ($C_R$) gewonnen wird,
   **dadurch gekennzeichnet, dass** eine Verarbeitungseinheit (50), bestehend aus wenigstens einer Konverter-Einheit (55) und einem Mikrocontroller (51), vorgesehen ist, in der die Kapazitätswerte des Messkondensators ($C_M$) sowie des Referenzkondensators ($C_R$) erfasst werden, aus beiden Kapazitätswerten der Druckmesswert (p) gebildet wird und in der ein weiterer Kapazitätswert erfasst wird, der einem Zusatzkondensator ($C_Z$) entspricht und aus dem ein Kontrolldruckmesswert (p') gewonnen wird, wobei durch Vergleich des Druckmesswertes (p) mit dem Kontrolldruckmesswert (p') auf die Funktionsfähigkeit der Druckmesszelle (10) geschlossen wird.

3. Verfahren nach Anspruch 2,
   **dadurch gekennzeichnet, dass** der Zusatzkondensator ($C_Z$) als Bauteil außerhalb der Druckmesszelle (10) ausgeführt ist, dessen Kapazitätswert von der Verarbeitungseinheit (50) erfasst wird.

4. Verfahren nach Anspruch 2,
   **dadurch gekennzeichnet, dass** der Zusatzkondensator ($C_Z$) in Form eines in der Verarbeitungseinheit (50), insbesondere im Mikrocontroller (51) abgespeicherten Kapazitätswerts ausgeführt ist.

5. Verfahren nach einem der vorhergehenden Ansprüche,
   **dadurch gekennzeichnet, dass** der Druckmesswert (p) und/oder der Kontrolldruckmesswert (p') mit Hilfe eines Quotientenverfahrens gewonnen wird.

6. Verfahren nach einem der vorhergehenden Ansprüche,
   **dadurch gekennzeichnet, dass** der Kontrolldruckmesswert (p') aus den Kapazitätswerten des Messkondensators ($C_M$) und des Zusatzkondenstors ($C_Z$) gewonnen wird.

7. Verfahren nach einem der Ansprüche 1 bis 5,
   **dadurch gekennzeichnet, dass** der Kontrolldruckmesswert (p') aus den Kapazitätswerten des Referenzkondensators ($C_R$) und des Zusatzkondensators ($C_Z$) gewonnen wird.

8. Verfahren nach einem der vorhergehenden Ansprüche,
   **dadurch gekennzeichnet, dass** der kapazitive Drucksensor (1) so kalibriert ist, dass der Kontrolldruckwert (p') und der Druckmesswert (p) die gleiche funktionale Abhängigkeit vom Prozessdruck aufweisen und ein Fehlerfall vorliegt, wenn die Differenz von Druckmesswert (p) und Kontrolldruckwert (p') einen vorgegebenen Grenzwert überschreitet.

**9.** Auswerteschaltung für einen kapazitiven Sensor (1), insbesondere Drucksensor, mit einem Messkondensator ($C_M$) und einem Referenzkondensator ($C_R$), wobei der Referenzkondensator ($C_R$) in einem Differenzierzweig (DZ) und der Messkondensator ($C_M$) in einem Integrierzweig (IZ) vorgesehen ist, die beide parallel geschaltet sind und mit einem Spannungssignal beaufschlagt werden, wobei das Ausgangssignal des Integrierzweiges (IZ) dem Differenzierzweig (DZ) zugeführt wird, an dessen Ausgang ein erstes druckabhängiges Ausgangssignal ($U_R$) anliegt, **dadurch gekennzeichnet, dass** parallel zum Differenzierzweig (DZ) ein Kontrollmesszweig (KMZ) mit einem Zusatzkondensator ($C_Z$) geschaltet ist und das Ausgangssignal des Integrierzweiges (IZ) zusätzlich dem Kontrollmesszweig (KMZ) zugeführt wird, an dessen Ausgang ein zweites druckabhängiges Ausgangssignal ($U_D$) anliegt, und beide Ausgangssignale ($U_R$, $U_D$) einer Vergleichereinheit (VE) zugeführt werden, an deren Ausgang ein Diagnosesignal ($U_{DIAG}$) ausgegeben wird.

**10.** Auswerteschaltung nach Anspruch 9,
**dadurch gekennzeichnet, dass** der Zusatzkondensator ($C_Z$) außerhalb der Druckmesszelle (10) angeordnet ist.

**Claims**

**1.** Method for the functional monitoring of a pressure measuring cell (10) of a capacitive pressure sensor (1), wherein the pressure measuring cell (10) comprises a measuring capacitor ($C_M$) and a reference capacitor ($C_R$) and the measured pressure value (p) is obtained from the capacitance values of the measuring capacitor ($C_M$) and the reference capacitor ($C_R$),
**characterized in that** a measured pressure check value (p') is obtained by means of an additional capacitor ($C_Z$), which is arranged outside of the pressure measuring cell (10), and the functionality of the pressure measuring cell (10) is inferred by comparison of the measured pressure value (p) with the measured pressure check value (p').

**2.** Method for the functional monitoring of a pressure measuring cell (10) of a capacitive pressure sensor (1), wherein the pressure measuring cell (10) comprises a measuring capacitor ($C_M$) and a reference capacitor ($C_R$) and the measured pressure value (p) is obtained from the capacitance values of the measuring capacitor ($C_M$) and the reference capacitor ($C_R$),
**characterized in that** a processing unit (50), composed of at least one converter unit (55) and a microcontroller (51), is provided, in which processing unit the capacitance values of the measuring capacitor ($C_M$) and the reference capacitor ($C_R$) are acquired, the measured pressure value (p) is formed from the two capacitance values and in which a further capacitance value is acquired, which further capacitance value corresponds to an additional capacitor ($C_Z$) and from which further capacitance value a measured pressure check value (p') is obtained, wherein the functionality of the pressure measuring cell (10) is inferred by comparison of the measured pressure value (p) with the measured pressure check value (p').

**3.** Method according to Claim 2,
**characterized in that** the additional capacitor ($C_Z$) is designed as a component outside of the pressure measuring cell (10), the capacitance valve of which additional capacitor is acquired by the processing unit (50).

**4.** Method according to Claim 2,
**characterized in that** the additional capacitor ($C_Z$) is designed in the form of a capacitance value stored in the processing unit (50), in particular in the microcontroller (51).

**5.** Method according to any of the preceding claims,
**characterized in that** the measured pressure value (p) and/or measured pressure check value (p') are obtained by means of a quotient method.

**6.** Method according to any of the preceding claims,
**characterized in that** the measured pressure check value (p') is obtained from the capacitance values of the measuring capacitor ($C_M$) and the additional capacitor ($C_Z$).

**7.** Method according to any of Claims 1 to 5,
**characterized in that** the measured pressure check value (p') is obtained from the capacitance values of the reference capacitor ($C_R$) and the additional capacitor ($C_Z$).

**8.** Method according to any of the preceding claims,

**characterized in that** the capacitive pressure sensor (1) is calibrated such that the pressure check value (p') and the measured pressure value (p) have the same functional dependency on the process pressure, and there is a fault when the difference between the measured pressure value (p) and the pressure check value (p') exceeds a predefined threshold value.

9. Evaluation circuit for a capacitive sensor (1), in particular a pressure sensor, comprising a measuring capacitor ($C_M$) and a reference capacitor ($C_R$), wherein the reference capacitor ($C_R$) is provided in a differentiating branch (DZ) and the measuring capacitor ($C_M$) is provided in an integrating branch (IZ), both said branches being connected in parallel and having a voltage signal applied thereto, wherein the output signal of the integrating branch (IZ) is supplied to the differentiating branch (DZ), a first pressure-dependent output signal ($U_R$) being present at the output of said differentiating branch,
**characterized in that** a check measurement branch (KMZ) having an additional capacitor ($C_Z$) is connected in parallel with the differentiating branch (DZ) and the output signal of the integrating branch (IZ) is additionally supplied to the check measurement branch (KMZ), a second pressure-dependent output signal ($U_D$) being present at the output of said check measurement branch, and the two output signals ($U_R$, $U_D$) are supplied to a comparator unit (VE) at the output of which a diagnosis signal ($U_{DIAG}$) is output.

10. Evaluation circuit according to Claim 9,
**characterized in that** the additional capacitor ($C_Z$) is arranged outside of the pressure measuring cell (10).

**Revendications**

1. Procédé de contrôle du fonctionnement d'une cellule de mesure de pression (10) d'un capteur de pression capacitif (1), la cellule de mesure de pression (10) présentant un condensateur de mesure ($C_M$) et un condensateur de référence ($C_R$) et la pression mesurée (p) étant obtenue à partir des valeurs de capacité du condensateur de mesure ($C_M$) et du condensateur de référence ($C_R$), **caractérisé en ce qu'**une pression mesurée de contrôle (p') est obtenue avec un condensateur supplémentaire ($C_Z$) qui est disposé à l'extérieur de la cellule de mesure de pression (10) et l'aptitude fonctionnelle de la cellule de mesure de pression (10) est déduite par une comparaison de la pression mesurée (p) avec la pression mesurée de contrôle (p').

2. Procédé de contrôle du fonctionnement d'une cellule de mesure de pression (10) d'un capteur de pression capacitif (1), la cellule de mesure de pression (10) présentant un condensateur de mesure ($C_M$) et un condensateur de référence ($C_R$) et la pression mesurée (p) étant obtenue à partir des valeurs de capacité du condensateur de mesure ($C_M$) et du condensateur de référence ($C_R$), **caractérisé en ce qu'**il est prévu une unité de traitement (50), constituée d'au moins une unité de conversion (55) et d'un microcontrôleur (51), dans laquelle sont collectées les valeurs de capacité du condensateur de mesure ($C_M$) ainsi que du condensateur de référence ($C_R$), la pression mesurée (p) étant calculée à partir des deux valeurs de capacité, et dans laquelle est collectée une valeur de capacité supplémentaire qui correspond à un condensateur supplémentaire ($C_Z$) et à partir de laquelle est obtenue une pression mesurée de contrôle (p'), l'aptitude fonctionnelle de la cellule de mesure de pression (10) étant déduite par une comparaison de la pression mesurée (p) avec la pression mesurée de contrôle (p').

3. Procédé selon la revendication 2, **caractérisé en ce que** le condensateur supplémentaire ($C_Z$) est réalisé sous la forme d'un composant en dehors de la cellule de mesure de pression (10), dont la valeur de capacité est collectée par l'unité de traitement (50).

4. Procédé selon la revendication 2, **caractérisé en ce que** le condensateur supplémentaire ($C_Z$) est réalisé sous la forme d'une valeur de capacité mise en mémoire dans l'unité de traitement (50), notamment dans le microcontrôleur (51).

5. Procédé selon l'une des revendications précédentes, **caractérisé en ce que** la pression mesurée (p) et/ou la pression mesurée de contrôle (p') sont obtenues à l'aide d'un procédé à quotient.

6. Procédé selon l'une des revendications précédentes, **caractérisé en ce que** la pression mesurée de contrôle (p') est obtenue à partir des valeurs de capacité du condensateur de mesure ($C_M$) et du condensateur supplémentaire ($C_Z$).

7. Procédé selon l'une des revendications 1 à 5, **caractérisé en ce que** la pression mesurée de contrôle (p') est obtenue à partir des valeurs de capacité du condensateur de référence ($C_R$) et du condensateur supplémentaire ($C_Z$).

8. Procédé selon l'une des revendications précédentes, **caractérisé en ce que** le capteur de pression capacitif (1) est calibré de telle sorte que la pression mesurée de contrôle (p') et la pression mesurée (p) présentent la même dépendance fonctionnelle à la pression de procédé et qu'il existe une situation d'erreur lorsque la différence entre la pression mesurée (p) et la pression mesurée de contrôle (p') devient supérieure à une valeur limite prédéfinie.

9. Circuit d'interprétation pour un capteur capacitif (1), notamment un capteur de pression, comprenant un condensateur de mesure ($C_M$) et un condensateur de référence ($C_R$), le condensateur de référence ($C_R$) étant prévu dans une branche de différentiation (DZ) et le condensateur de mesure ($C_M$) dans une branche d'intégration (IZ), les deux étant connectés en parallèle et étant chargés avec un signal de tension, le signal de sortie de la branche d'intégration (IZ) étant acheminé à la branche de différentiation (DZ) à la sortie de laquelle se trouve un premier signal de sortie ($U_R$) dépendant de la pression, **caractérisé en ce qu'**en parallèle avec la branche de différentiation (DZ) est connectée une branche de mesure de contrôle (KMZ) dotée d'un condensateur supplémentaire ($C_Z$) et le signal de sortie de la branche d'intégration (IZ) est en plus acheminé à la branche de mesure de contrôle (KMZ) à la sortie de laquelle se trouve un deuxième signal de sortie ($U_D$) dépendant de la pression, et les deux signaux de sortie ($U_R$, $U_D$) sont acheminés à une unité de comparaison (VE) à la sortie de laquelle est délivré un signal de diagnostic ($U_{DIAG}$).

10. Circuit d'interprétation selon la revendication 9, **caractérisé en ce que** le condensateur supplémentaire ($C_Z$) est disposé en dehors de la cellule de mesure de pression (10).

20

10     30     µC

→ Ausgangssignal

← Spannungsversorgung

1

**Fig. 1**

$C_M$      $C_R$

Entlüftungskanal 18

Grundkörper 12

Glaslotring 16

Membran 14

Ringelektrode R

Druckmesszelle 10     Mittelelektrode M     Membranelektrode M$\varepsilon$

19

**Fig. 2**

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19851506 C1
- EP 0569573 B1